# EUROPEAN PATENT SPECIFICATION

(11) **EP 0 990 113 B1**
(45) Date of publication and mention of the grant of the patent: **17.04.2002**
(21) Application number: 98901474.1
(22) Date of filing: 27.01.1998
(51) Int. Cl.: G01B 7/00, G01B 7/06, A01G 25/16

(54) **LEAF THICKNESS SENSING DEVICE**
BLATTDICKEN-MESSVORRICHTUNG
DISPOSITIF DE MESURE DE L'EPAISSEUR D'UNE FEUILLE

(30) Priority: 27.01.1997 IL 12007897
(43) Date of publication of application: 05.04.2000
(73) Proprietor: YISSUM RESEARCH DEVELOPMENT COMPANY OF THE HEBREW UNIVERSITY OF JERUSALEM, Jerusalem 92 182 (IL)
(72) Inventor: BRAVDO, Ben-Ami, 76354 Rehovot (IL); SHARON, Yehoshua, 000000 (IL); SELIGMANN, Ron, 62008 Tel-Aviv (IL)
(74) Representative: Vaillant, Jeanne
(86) International application number: IL9800040
(87) International publication number: WO9833037

(56) References cited:
- GB-A- 2 170 908
- US-A- 3 826 487
- US-A- 4 163 550
- US-A- 4 189 841
- US-A- 4 313 172
- US-A- 4 638 594
- US-A- 4 750 368
- US-A- 5 208 997
- PATENT ABSTRACTS OF JAPAN vol. 005, no. 116 (M-080), 25 July 1981 & JP 56 056445 A (FUJI ELECTRIC CO LTD), 18 May 1981,
- HADJILOUCAS S. ET AL.: 'Optical Sensors for Monitoring Water Uptake in Plants' JOURNAL OF LIGHTWAVE TECHNOLOGY vol. 13, no. 7, July 1995, pages 1421 - 1428

## Description

### FIELD OF THE INVENTION

This invention relates to the sensing of leaf thickness and in particular to the sensing of changes in leaf thickness, particularly for use in irrigation systems and to an irrigation system.

### BACKGROUND OF THE INVENTION

Conventional irrigation systems are intended to periodically replenish accumulated soil water deficits which are associated *inter alia* with the water retention capacity of the soil, the type of the plants and environmental conditions.

Various proposals have been made and, in some cases implemented, to provide an irrigation system designed to be responsive to the water status of the soil. Thus, for example, it is known to monitor the relative humidity in the soil and to arrange for the irrigation system to be responsive to this relative humidity.

It is known that changes in the water status of a plant are reflected in dimensional changes in one or other of the plant's component elements such as leaves, stalks or stems, and fruits, etc. It has been proposed to monitor such changes and to arrange for periodic irrigation in response to such changes. Of these plant organs, it has been particularly proposed to utilize changes in a leaf's thickness for controlling an irrigation system seeing that it is believed that the instantaneous water status of a leaf of a plant as represented by its thickness provides an accurate indication of the instantaneous water status of the plant.

US-A-4 638 594 indicates a sensor for a stem, branch, or trunk. An optical leaf thickness transducer is indicated in a paper of S, Hadjiloucas et al. "Optical Sensors for Monitoring Water Uptake in Plants", pages 1421-1428, Journal of Lightwave Technology, vol. 13, no. 7, July 1995, IEEE.

It is therefore clear that in order to provide for an efficiently operating irrigation system responsive to leaf thickness sensing, it is of prime importance to have available a reliable and efficient leaf thickness sensing device.

It is therefore an object of the present invention to provide a leaf thickness sensing device primarily for use in irrigation systems.

### SUMMARY OF THE INVENTION

According to the present invention, there is provided a leaf thickness sensing device comprising mounting means for flexibly mounting adjacent a leaf whose thickness is to be sensed, a leaf support element coupled to said mounting means, a displaceable leaf abutting element juxtaposed with respect to and biased towards said leaf support element so as to be in firm, non-destructive abutting contact with a leaf to be releasably retained on said support element; a displacement transducer element responsibly coupled to said leaf abutting element and serving to generate a signal corresponding to displacement of said second element relative to said first element.

Preferably, the displaceable leaf abutting element is constituted by a cantilever mounted resiliently flexible strip whose tip is adapted to bear on the leaf so that leaf thickness changes give rise to corresponding changes in flexing of the strip, said transducer preferably comprising a strain gauge responsive to changes in flexing of the strip.

It is known that a leaf's thickness typically expands and contracts over 20-50 microns during the course of a solar day, i.e. from sunrise to sunrise and, consequently, the displacement transducer element which is responsive to the separation between the abutting elements has a sensitivity to variations in thickness in the order of ± 1 micron.

When the device is incorporated in an irrigation system, the output of the transducer when coupled to an irrigation controller is effective in actuating the system in response to the sensed cyclic diurnal variations in leaf thickness which are related to the water status of the plant bearing the leaf.

The irrigation controller is programmed so as to ensure that the required amount of irrigation is provided in accordance with needs of the particular plant, a leaf of which is having its thickness variations sensed.

The invention is preferably associated with a drip irrigation system as this has been found to be particularly effective in providing a rapid localized irrigation water supply as required.

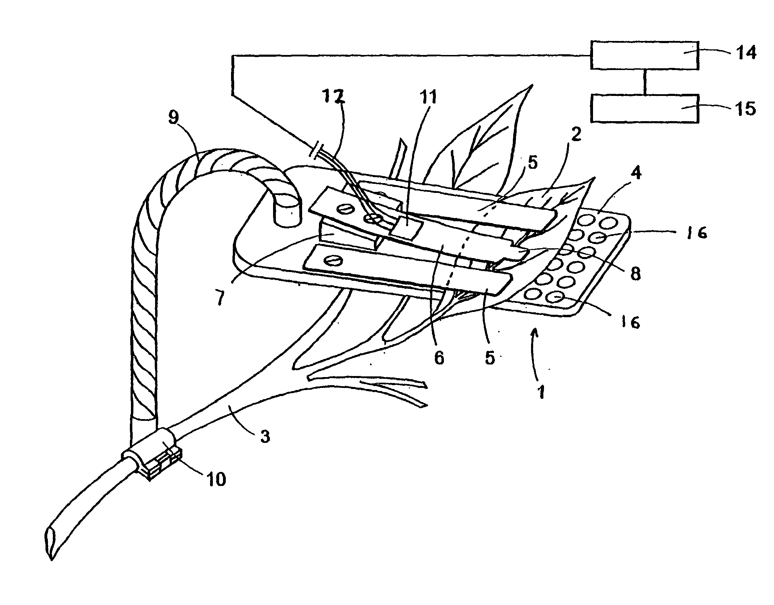

### BRIEF DESCRIPTION OF THE DRAWING

For a better understanding of the invention and to show how the same may be carried out in practice, reference will now be made by way of non-limiting example, to the accompanying drawing which is a perspective view of a device for automatically sensing variations in the thickness of a leaf in situ in accordance with the present invention schematically shown as incorporated in an irrigation system.

### DETAILED DESCRIPTION OF PREFERRED EMBODIMENT

As shown in the Figure, a device 1 for sensing thickness variations of a leaf 2 growing from a twig 3 comprises a plate 4 (constituting a leaf support element). A pair of clamping strips 5 is mounted on the plate 4 and which serve, as shown, for firmly retaining the leaf 2 in position on the plate 4. Between the clamping strips is mounted, cantilever fashion, an elongated metallic strip 6 which, by virtue of being mounted on the plate 4 via an inclined mounting block 7, has its tip 8 effectively biased towards the plate 4 so as to bear on the leaf 2 with minimal pressure.

The device 1 is provided with mounting means in the form of a flexible arm 9 which is secured at one end to the plate 4 and is provided, at the other end, with a clamping collar 10 for securing to the twig 3.

A strain gauge 11 (constituting a displacement transducer element) is mounted on the strip 6 and has output wires 12 which are coupled to an irrigation controller 14 which in turn is responsively coupled to an irrigation control valve 15.

The plate 4 is formed with apertures 16 so as to ensure gas interchange between the retained leaf portion and the atmosphere.

In use, with the leaf retained on the plate 4 and the tip 8 of the strip 6 bearing thereon, variations in the thickness of the leaf result in variation in the degree of flexing of the strip 6, which in turn gives rise to variation in the output of the strain gauge 11. Calibration of the device is effected so as to correlate the output of the strain gauge 12 with variations in leaf thickness. In this way, the irrigation controller 14 receives signals which reflect thickness changes of the leaf 2, which in turn reflects changes in the water status of the plant

The irrigation controller 14 is suitably programmed in accordance with predetermined irrigation regimes for the plants concerned so as to ensure opening and closing of the irrigation valve, in order to maintain the plant's water status at a required level.

As an alternative to the leaf thickness sensing device specifically described and illustrated above, other devices which are equally sensitive and responsive to such micronic changes in leaf thickness may be employed such as, for example, a device having a movable element bearing on the leaf, displacement of which gives rise to a corresponding displacement in a potentiometer type transducer.

In all cases, the device should be so designed so as not to interfere with light collection by the leaf, and in this connection components of the device can be formed of a translucent material.

The regulation of an irrigation system for an entire orchard using a single device 1 has been shown feasible in experimental work when the selected leaf, whose thickness is to be sensed, is located in the position representative of the statistical average of all the leaves in the orchard canopy. Such a leaf is typically 1 m from ground level, slightly disposed inward relative to the periphery of its tree's leaf canopy and oriented toward the sun in its mid-day position.

It has been found that the use of an irrigation system which is arranged to be responsive to micronic variations in leaf thickness results in improved crop yields and lower water consumption.

## Claims

1. A leaf thickness sensing device comprising mounting means (9, 10) for flexibly mounting said device adjacent a leaf whose thickness is to be sensed, a leaf support element (4) coupled to said mounting means, a displaceable leaf abutting element (6) juxtaposed with respect to and biased towards said leaf support element so as to be in firm, non-destructive abutting contact with a leaf to be releasably retained on said leaf support element; a displacement transducer element (11) responsibly coupled to said leaf abutting element and serving to generate a signal corresponding to displacement of said leaf abutting element relative to said leaf support element.

2. The device according to Claim 1, wherein said leaf abutting element (6) is constituted by a metallic strip cantilever mounted on said support (4) and adapted to bear at its tip with minimal pressure on the leaf and wherein said transducer (11) comprises a strain gauge mounted on said strip and responsive to changes in flexing of the strip.

3. The device according to Claim 1, wherein said leaf support element (4) is provided with a grid of apertures.

4. The device according to Claim 1, wherein said leaf support element (4) is made of substantially translucent material.

5. An irrigation system comprising a leaf thickness sensing device according to any one of the preceding claims, an irrigation controller responsively connected to an output of said transducer and a main irrigation valve coupled to said controller and adapted to be actuated in response to sensed variations in said leaf thickness.

## Patentansprüche

1. Blattdicken-Erfassungsvorrichtung mit
- einer Befestigungseinrichtung, um die Vorrichtung flexibel benachbart zu einem Blatt zu befestigen, dessen Dicke erfasst werden soll,
- einem mit der Befestigungseinrichtung gekoppelten Blatt-Trägerelement,
- einem verschiebbaren Blattberührelement, das neben dem Blatt-Trägerelement angeordnet und in dessen Richtung vorgespannt ist, um in fester, nicht zerstörender Berührung mit einem Blatt zu stehen, das lösbar auf dem Blatt-Trägerelement gehalten werden soll, und
- einem Verschiebungsumwandlungselement, das ansprechend mit dem Blattberührelement gekoppelt ist und dazu dient, ein der Verschiebung des zweiten Elements relativ zu dem ersten Element entsprechendes Signal zu erzeugen.

2. Vorrichtung nach Anspruch 1, wobei das Blattberührelement durch einen Metallstreifen gebildet ist, der auf dem Träger freitragenderweise befestigt ist und dazu eigerichtet ist, an seiner Spitze mit einem minimalen Druck auf dem Blatt zu lasten, und wobei der Umwandler einen Dehnmeßstreifen umfasst, der auf dem Streifen befestigt ist und auf Veränderungen der Biegung des Streifens anspricht.

3. Vorrichtung nach Anspruch 1, wobei das Blatt-Trägerelement mit einem Gitter aus Öffnungen versehen ist.

4. Vorrichtung nach Anspruch 1, wobei das Blatt-Trägerelement aus einem im wesentlichen lichtdurchlässigen Material besteht.

5. Bewässerungssystem mit
- einer Blattdicken-Erfassungsvorrichtung gemäß einem der vorangehenden Ansprüche,
- einer Bewässerungssteuereinrichtung, die ansprechend mit einem Ausgang des Umwandlers gekoppelt ist, und
- einem Bewässerungshauptventil, das mit der Steuereinrichtung gekoppelt und dazu eingerichtet ist, auf die erfassten Veränderungen der Blattdicke hin betätigt zu werden.

## Revendications

1. Dispositif de détection d'épaisseur de feuille comprenant un moyen de montage pour monter de façon flexible ledit dispositif adjacent à une feuille dont l'épaisseur doit être détectée, un élément de support de feuille couplé audit moyen de montage, un élément d'aboutement juxtaposé par rapport au, et sollicité vers ledit élément de support de feuille de sorte à être en contact d'aboutement ferme, non destructeur, avec une feuille à maintenir de manière amovible sur ledit élément de support de feuille, un élément tranducteur de déplacement couplé de manière sensible audit élément d'aboutement de feuille et servant à générer un signal correspondant au déplacement dudit second élément par rapport audit premier élément.

2. Dispositif selon la revendication 1, dans lequel ledit élément d'aboutement de feuille est constitué d'un élément en bande métallique monté en porte-à-faux sur ledit support et adapté pour appuyer au niveau de sa pointe, avec une pression minimale sur la feuille et dans lequel ledit tranducteur comprend une jauge de contrainte montée sur ladite pointe et sensible aux changements de flexion de la bande.

3. Dispositif selon la revendication 1, dans lequel ledit élément de support de feuille est pourvu d'une grille à ouvertures.

4. Dispositif selon la revendication 1, dans lequel ledit élément de support de feuille est constitué d'un matériau essentiellement translucide.

5. Système d'irrigation comprenant un dispositif de détection d'épaisseur de feuille selon l'une quelconque des revendications précédentes, un contrôleur d'irrigation connecté de manière sensible à une sortie dudit transducteur et une vanne d'irrigation principale couplée audit contrôleur et conçue pour être actionnée en réponse aux variations détectées de ladite épaisseur de feuille.
